# EUROPÄISCHE PATENTANMELDUNG

(11) **EP 2 458 300 A2**
(43) Veröffentlichungstag der Anmeldung: **30.05.2012**
(21) Anmeldenummer: 11189466.3
(22) Anmeldetag: 17.11.2011
(51) Int. Cl.: F24H 9/02, F24H 9/20

(54) **Wassererwärmer mit einer Erdungseinrichtung**

(30) Priorität: 19.11.2010 CN 201020624066 U
(71) Anmelder: BSH Bosch und Siemens Hausgeräte GmbH, 81739 München (DE)
(72) Erfinder: Schröder, Bernd, Nanjing Jiangsu 210008 (CN); Xu, Haihong, Yangzhou Jiangsu 225107 (CN)

(57) **Zusammenfassung**

Die vorliegende Erfindung bezieht sich auf einen Wassererwärmer mit einem Innenbehälter, einer Wärmequelle, einem Gehäuse, einem Steuerelement, einer Erdungseinrichtung und Erdleitern. Dabei dient das Steuerelement zum Steuern des Wassererwärmers, um vorbestimmte Funktionen zu realisieren. Die Erdungseinrichtung umfasst eine Erdungsplatte, die einerseits am Gehäuse befestigt und andererseits mit dem Steuerelement verbunden ist. Die Erdleiter weisen jeweils eine Erdungsklemme auf, die in Kontakt mit der Erdungsplatte steht.

Mit einer derartigen Ausgestaltung kann der Wartungsraum in vollem Maße ausgenutzt und gleichzeitig der Einbau der Erdleiter vereinfacht werden

## Beschreibung

### Hintergrund der Erfindung

### Die vorliegende Erfindung einen Wassererwärmer gemäß dem Oberbegriff des Patentanspruchs 1.

### Stand der Technik

Herkömmliche Wassererwärmer bestehen in der Regel aus einem Innenbehälter, einem außerhalb des Innenbehälters angebrachten Gehäuse und einer zwischen Innenbehälter und Gehäuse befindlichen Wärmeisolierschicht. Der Wassererwärmer ist üblicherweise an einer Wand im Badezimmer befestigt und weist an seinem Gehäuse eine Halterbaugruppe auf, die sich mit einer an der Wand angebrachten Halteplatte verbinden lässt. Aus Sicherheitsgründen ist bei einem Wassererwärmer, insbesondere bei allen metallischen Bauteilen des Wassererwärmers im Allgemeinen eine äußerst sichere Erdung erforderlich. Typischerweise ist dazu an einem metallischen Bauteil wie z.B. dem Innenbehälter des Wassererwärmers eine Erdungseinrichtung vorgesehen, an welche dann der Erdleiter des elektrischen Heizstabs, des Metallgehäuses und des Netzkabels jeweils angeschlossen wird, um eine Erdung zu realisieren. Diese Erdungskabel befinden sich meistens in einem kleinen Wartungsraum zwischen einem dem Flansch zugewandten Ende des Innenbehälters und einem sogenannten Wartungsschild des Gehäuses, der zusätzlich weitere Steuerelemente wie etwa Steuerplatinen, Temperaturregler, Hochtemperaturbegrenzer usw. aufnehmen soll. So erhebt sich die Frage, wie man die genannten Elemente und Erdungskabel in einem derart kleinen Raum zweckmäßig anordnen kann.

### Der Erfindung zugrundeliegende Aufgabe

Aufgabe der vorliegenden Erfindung ist es, einen Wassererwärmer mit einer verbesserten Erdungseinrichtung anzubieten, mit der der Wartungsraum zum Einbau der Erdleiter in vollem Maße ausgenutzt werden kann.

### Erfindungsgemäße Lösung

Die Lösung der gestellten Aufgabe gelingt durch einen Wassererwärmer mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Bei der vorliegenden Erfindung wird der Wartungsraum in vollem Maße ausgenutzt, da die erfindungsgemäße Erdungseinrichtung zusätzlich zum Anschluss von Erdleitern der Befestigung weiterer Steuerelemente dienen kann. Der Einbauraum kann folglich eine höhere Anzahl an Elementen aufnehmen.

### Bevorzugte Ausgestaltung der Erfindung

In einer bevorzugten Ausführungsform der vorliegenden Erfindung umfasst die Erdungsplatte einen mit den Erdungsklemmen verbundenen, ersten Abschnitt und einen mit dem Steuerelement verbundenen, zweiten Abschnitt. Somit können mehrere Bauteile kontaktiert werden und der Einbauraum wird optimal ausgenutzt.

Bevorzugt ist der zweite Abschnitt in einem rechten Winkel zum ersten Abschnitt angeordnet. Diese Anordnung der zwei Abschnitte stellt eine kompakte Bauweise dar, und ferner kann ein platzsparender Anschluss der Bauteile realisiert werden.

In einer weiteren Weiterbildung der vorliegenden Erfindung ist am ersten Abschnitt ein Erdungszeichen aufgebracht.

Erfindungsgemäß bevorzugt weist das Gehäuse einen mit der Erdungsplatte verbundenen Verbindungsabschnitt mit Senkbohrungen auf und die Erdungseinrichtung umfasst ferner Schrauben und Muttern, wobei die Muttern in den Senkbohrungen des Verbindungsabschnitts des Gehäuses aufgenommen sind. Durch die Senkbohrungen können die Muttern sicher gehaltert werden, und folglich kann das Herauslösen dieser unterbunden werden.

Vorzugsweise sind in der Erdungsplatte und in den Erdungsklemmen miteinander korrespondierende Bohrungen ausgebildet, durch die die Schrauben hindurchragen und mit den Muttern zusammenwirken. Somit kann das Bauteil zur Montage arretiert werden.

Es ist bevorzugt, dass in der Erdungsplatte mehrere Bohrungen ausgebildet sind, die jeweils einer Erdungsklemme der mehreren Erdleiter zugeordnet sind. Somit werden flexible Anschlussmöglichkeiten bereitgestellt.

In einer weiteren Weiterbildung der vorliegenden Erfindung ist die Erdungsplatte fest am Verbindungsabschnitt des Gehäuses angebracht und überdeckt die Senkbohrungen, so dass sich die Muttern nicht aus den Senkbohrungen herauslösen können.

Zweckmäßiger Weise ist als Steuerelement ein Hochtemperaturbegrenzer vorgesehen.

Bevorzugt ist als Wärmequelle ein elektrisches Heizrohr vorgesehen.

Im Vergleich zum Stand der Technik bietet die vorliegende Erfindung nachfolgende Vorteile: Bei der vorliegenden Erfindung wird der Wartungsraum in vollem Maße ausgenutzt, da die erfindungsgemäße Erdungseinrichtung zusätzlich zum Anschluss von Erdleitern der Befestigung weiterer Steuerelemente dienen kann. Mit anderen Worten bleibt mehr Einbauraum für andere Elemente als im Stand der Technik zurück. Darüber hinaus reichen zum Anschluss der Erdleiter lediglich eine Ausrichtung der Bohrungen der Erdungsklemmen mit denen des ersten Abschnitts und eine anschließende Befestigung durch Schrauben aus, was die Zusammensetzung vereinfacht.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen:
- Fig. 1: eine perspektivische Ansicht einer Ausführungsform eines erfindungsgemäßen Wassererwärmers bei entferntem Wartungsschild zur Darstellung der Einbaustelle einer Erdungseinrichtung im Einbauraum,
- Fig. 2: in vergrößerter Darstellung die Verbindung zwischen einer Erdungsplatte der Erdungseinrichtung gemäß Fig. 1 und einem Hochtemperaturbegrenzer,
- Fig. 3: eine räumliche Vergrößerung der Erdungseinrichtung gemäß Fig. 1 und
- Fig. 4: in ähnlicher Darstellung wie Fig. 3 einen Teilschnitt der Verbindung zwischen Erdungseinrichtung, Erdleitern und Gehäuse.

### Ausführliche Beschreibung

Bei der nachfolgenden Beschreibung zweier bevorzugter Ausführungsformen der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

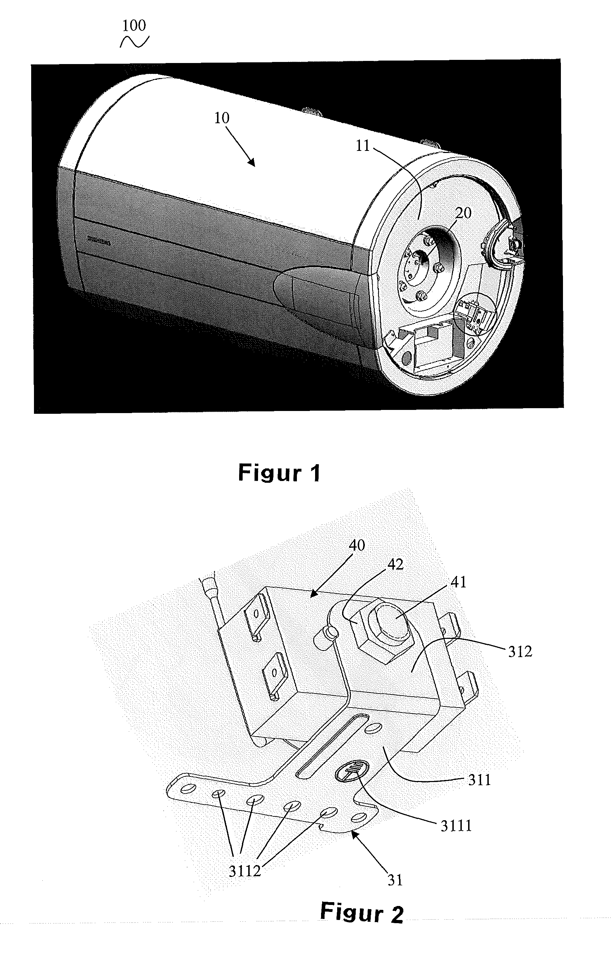

In Fig. 1 ist eine Ausführungsform des erfindungsgemäßen Wassererwärmers gezeigt. Der Wassererwärmer 100 umfasst i.d.R. einen Innenbehälter (nicht dargestellt) zum Speichern von erhitztem Wasser, ein den Innenbehälter umschließendes Gehäuse 10 und eine zwischen Innenbehälter und Gehäuse 10 befindliche, mit einem Schaumstoff (z.B. aus Polyurethanen) gefüllte Wärmeisolierschicht (nicht bezeichnet). Zudem umfasst der Wassererwärmer 100 eine Einlassöffnung (nicht dargestellt) zum Einleiten von Kaltwasser in den Innenbehälter und eine Auslassöffnung (nicht dargestellt) zum Ableiten von Warmwasser, welche jeweils mit dem Innenbehälter verbunden sind. Darüber hinaus umfasst der Wassererwärmer 100 zum Erhitzen von kaltem Wasser eine Wärmequelle, die unterschiedlich ausgeführt sein kann. So kann an der Wandung des Innenbehälters des elektrischen Wassererwärmers gemäß Fig. 1 beispielsweise ein Flansch (nicht bezeichnet) vorhanden sein, an dem ein elektrisches Heizrohr 20 angebracht ist und in das innerhalb des Innenbehälters gespeicherte Wasser hineinragt. Dieses Heizrohr kann einen Widerstandsdraht mit hoher Impedanz enthalten, wobei sich der Plus- und Minusanschluss des Widerstandsdrahts am Flansch befinden und mit einer 220V- oder 110V-Wechselstromversorgung verbunden sind.

Bei anderen Wassererwärmern kann die Flüssigkeit im Innenbehälter beispielsweise durch eine außerhalb des Innenbehälters angeordnete Brennkammer im Falle eines Gaswasserheizers erwärmt werden.

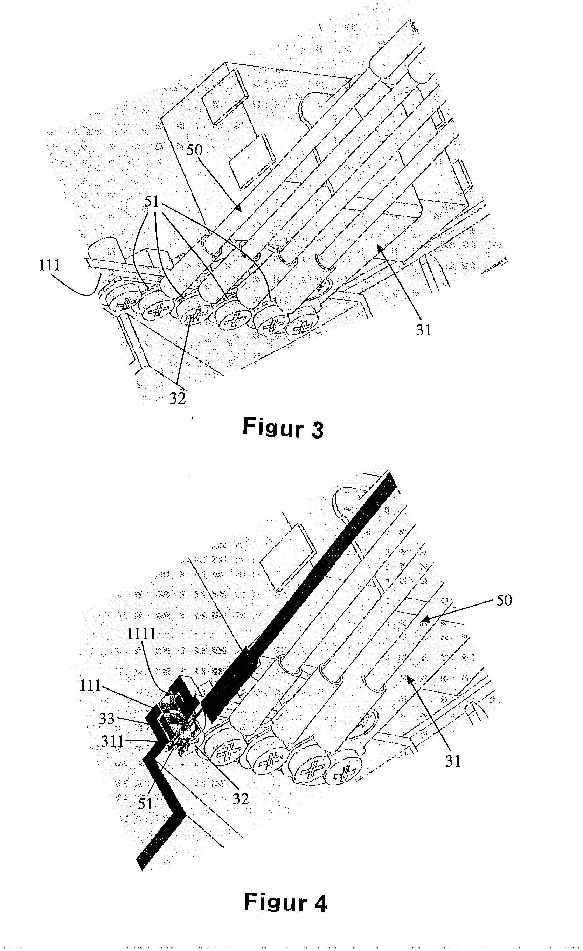

Wie ferner aus Fig. 2 bis 4 hervorgeht, ist zwischen einem dem Flansch zugewandten Ende des Innenbehälters des Wassererwärmers und einem Wartungsschild (nicht dargestellt) des Gehäuses 10 ein Wartungsraum 11 zur Aufnahme von Steuerplatinen, Hochtemperaturbegrenzern, Temperaturreglern usw. ausgebildet.

Mit diesen Steuerelementen können vorbestimmte Funktionen des Wassererwärmers realisiert werden. So lässt sich z.B. mit einem Hochtemperaturbegrenzer (high limiter) 40 bei Überschreiten einer vorgegebenen oberen Grenztemperatur (beispielsweise 77°C) die Stromversorgung der Wärmequelle unterbrechen, damit sich der Benutzer nicht mit dem heißen Wasser verbrennt. Nach Stromausfall ist ein manueller Neustart erforderlich. Im Wartungsraum 11 ist des Weiteren eine Erdungseinrichtung zum Anschluss von Erdleitern 50 angeordnet, die eine metallische Erdungsplatte 31 aus einem ersten Abschnitt 311 und einem zweiten Abschnitt 312 umfasst. In der vorliegenden Ausführungsform ist der erste Abschnitt 311 zum Verbinden mit den Erdleitern 50 vorgesehen, während der zweite Abschnitt 312 fest mit dem Hochtemperaturbegrenzer 40 verbunden ist. Um eine einfache Anordnung im Wartungsraum 11 zu ermöglichen, ist der zweite Abschnitt 312 in einem rechten Winkel zum ersten Abschnitt 311 angeordnet. In der vorliegenden Ausführungsform ist am Hochtemperaturbegrenzer 40 einteilig ein Bolzen 41 mit Außengewinde ausgebildet, der durch eine Bohrung (nicht dargestellt) im zweiten Abschnitt 312 der metallischen Erdungsplatte 31 hindurch geführt wird und mit einer Mutter 42 zusammenwirken kann, um den zweiten Abschnitt 312 zu befestigen. Alternativ kann der zweite Abschnitt 312 aber auch zum Befestigen anderer Steuerelemente dienen. Am ersten Abschnitt 311 ist ein Erdungszeichen 3111 zur Angabe der Verbindungsstelle für die Erdleiter 50 aufgebracht. Im Endbereich des ersten Abschnitts 311 befinden sich mehrere, im vorliegenden Fall insgesamt sechs nebeneinander angeordnete Bohrungen zum Anschluss der Erdungsklemmen 51 der Erdleiter 50, bei denen die mittig angeordneten vier Bohrungen 3112 jeweils einer Erdungsklemme 51 des Erdleiters 50 zugeordnet sind. In jeder der Erdungsklemmen 51 ist ebenfalls eine der Bohrung 3112 des ersten Abschnitts 311 entsprechende Bohrung (nicht dargestellt) ausgebildet. Zusätzlich dazu umfasst die Erdungseinrichtung eine Mehrzahl von Schrauben 32 und Muttern 33. Das Gehäuse 10 erstreckt sich in der Nähe des Endbereichs seitlich ins Innere des Wartungsraums 11 zu einem Verbindungsabschnitt 111. In der vorliegenden Ausführungsform sind im Verbindungsabschnitt 111 vier Senkbohrungen 1111 zur Aufnahme jeweils einer Mutter 33 vorgesehen. Bei der Montage können zunächst die Muttern 33 in die Senkbohrungen 1111 eingesetzt werden und dann wird der erste Abschnitt 311 der Erdungsplatte 31 an den Verbindungsabschnitt 111 befestigt. Dazu wird der erste Abschnitt 311 auf den Verbindungsabschnitt 111 aufgesetzt, wobei die vier mittigen Bohrungen 3112 jeweils mit den Muttern 33 in den vier Senkbohrungen 1111 des Verbindungsabschnitts 111 fluchten. Hingegen dienen die Bohrungen auf beiden Enden des ersten Abschnitts 311 zum Durchführen jeweils einer Schraube und ermöglichen somit eine direkte Befestigung an den Verbindungsabschnitt 111. Auf diese Weise wird eine feste Verbindung zwischen Anschlussplatte 31 und Gehäuse 10 hergestellt. Zugleich wird ein Herauslösen der Mutter 33 aus den Senkbohrungen 1111 durch den ersten Abschnitt 311 der Erdungsplatte unterbunden. Anschließend werden die Bohrungen in den Erdungsklemmen 51 der Erdleiter 50 mit den Bohrungen 3112 im ersten Abschnitt 311 ausgerichtet, damit die Schrauben 32 der Reihe nach durch die Bohrungen der Erdungsklemmen 51 und des ersten Abschnitts 311 der Erdungsplatte hindurch geführt werden und mit entsprechenden Muttern 33 zusammenwirken können, um die Erdleiter 50 mit der Erdungsplatte 31 zu verbinden. Es ist auch denkbar, dass mehrere Erdleiter in einer gemeinsamen Bohrung mit der Erdungsplatte verschraubt sind.

Bei der vorliegenden Erfindung wird der Wartungsraum in vollem Maße ausgenutzt, da die erfindungsgemäße Erdungseinrichtung zusätzlich zum Anschluss von Erdleitern der Befestigung weiterer Steuerelemente dienen kann. Mit anderen Worten bleibt mehr Einbauraum für andere Elemente als im Stand der Technik zurück. Darüber hinaus reichen zum Anschluss der Erdleiter lediglich eine Ausrichtung der Bohrungen der Erdungsklemmen mit den des ersten Abschnitts und eine anschließende Befestigung durch Schrauben aus, was die Zusammensetzung vereinfacht.

Bisher wurden Ausführungsformen der vorliegenden Erfindung dargestellt und beschrieben, die jedoch nicht jeweils nur eine separate Ausgestaltung enthalten. Im Rahmen der vorliegenden Erfindung können vielmehr die in den einzelnen Ausführungsformen offenbarten Ausgestaltungen auf geeignete Weise miteinander zu anderen, den Fachleuten auf diesem Gebiet naheliegenden Ausführungsformen kombiniert werden.

Das oben Beschriebene stellt keine Einschränkung der Erfindung dar, sondern dient lediglich der beispielhaften Darstellung möglicher Ausführungsformen der Erfindung. Jede gleichwertige Ausführung oder Variation, welche von den Grundideen der Erfindung ausgeht, ist daher vom Schutzumfang der vorliegenden Erfindung umfasst.

## Patentansprüche

1. Wassererwärmer (100) mit
- einem Innenbehälter,
- einer Wärmequelle (20), die dem Innenbehälter entsprechend zugeordnet ist, um das Wasser im Innenbehälter zu erhitzen,
- einem den Innenbehälter von außen umschließenden Gehäuse (10),
- einem Steuerelement (40) zum Steuern des Wassererwärmers (100), um vorbestimmte Funktionen zu realisieren,
- einer Erdungseinrichtung mit einer Erdungsplatte (31), wobei die Erdungsplatte (31) einerseits am Gehäuse (10) befestigt und andererseits mit dem Steuerelement (40) verbunden ist,
- Erdleitern (50) mit jeweils einer Erdungsklemme (51), die in Kontakt mit der Erdungsplatte (31) steht.

2. Wassererwärmer (100) gemäß Anspruch 1, **dadurch gekennzeichnet, dass** die Erdungsplatte (31) einen mit den Erdungsklemmen (51) verbundenen, ersten Abschnitt (311) und einen mit dem Steuerelement verbundenen, zweiten Abschnitt (312) umfasst.

3. Wassererwärmer (100) gemäß Anspruch 2, **dadurch gekennzeichnet, dass** der zweite Abschnitt (312) in einem rechten Winkel zum ersten Abschnitt (311) angeordnet ist.

4. Wassererwärmer (100) nach einem der vorhergehenden Ansprüche 2 oder 3, **dadurch gekennzeichnet, dass** am ersten Abschnitt (311) ein Erdungszeichen (311) aufgebracht ist.

5. Wassererwärmer gemäß einem der Ansprüche 1 bis 4, **dadurch gekennzeichnet, dass** das Gehäuse (10) einen mit der Erdungsplatte (31) verbundenen Verbindungsabschnitt (111) mit Senkbohrungen (1111) aufweist, und dass die Erdungseinrichtung ferner Schrauben und Muttern (32, 33) umfasst, wobei die Muttern (33) in den Senkbohrungen (1111) des Verbindungsabschnitts (111) des Gehäuses (10) aufgenommen sind.

6. Wassererwärmer (100) nach einem der vorhergehenden Ansprüche, **dadurch gekennzeichnet, dass** in der Erdungsplatte (31) und in den Erdungsklemmen (51) miteinander korrespondierende Bohrungen (3112) ausgebildet sind, durch die die Schrauben (32) hindurchragen und mit den Muttern (33) zusammenwirken.

7. Wassererwärmer (100) nach einem der vorhergehenden Ansprüche, **dadurch gekennzeichnet, dass** in der Erdungsplatte (31) mehrere Bohrungen (3112) ausgebildet sind, die jeweils einer Erdungsklemme (51) der mehreren Erdleiter (50) zugeordnet sind.

8. Wassererwärmer (100) nach einem der vorhergehenden Ansprüche, **dadurch gekennzeichnet, dass** die Erdungsplatte (31) fest am Verbindungsabschnitt (111) des Gehäuses (10) angebracht ist und die Senkbohrungen (1111) so überdeckt, dass sich die Muttern (33) nicht aus den Senkbohrungen (1111) herauslösen können.

9. Wassererwärmer (100) nach einem der vorhergehenden Ansprüche, **dadurch gekennzeichnet, dass** als Steuerelement (40) ein Hochtemperaturbegrenzer vorgesehen ist.

10. Wassererwärmer (100) nach einem der vorhergehenden Ansprüche, **dadurch gekennzeichnet, dass** als Wärmequelle (20) ein elektrisches Heizrohr vorgesehen ist.
